# EUROPÄISCHE PATENTSCHRIFT

(11) **EP 3 003 769 B1**
(45) Veröffentlichungstag und Bekanntmachung des Hinweises auf die Patenterteilung: **10.01.2018**
(21) Anmeldenummer: 14725076.5
(22) Anmeldetag: 13.05.2014
(51) Int. Cl.: B60K 28/04, B60K 28/06, B60W 50/14, G08B 21/06, B60W 30/12, B62D 15/02

(54) **VERFAHREN UND VORRICHTUNG ZUR NOTFALLASSISTENZ**
METHOD AND DEVICE FOR EMERGENCY ASSISTANCE
PROCÉDÉ ET DISPOSITIF POUR L'AIDE D'URGENCE

(30) Priorität: 04.06.2013 DE 102013009339
(43) Veröffentlichungstag der Anmeldung: 13.04.2016
(73) Patentinhaber: Volkswagen Aktiengesellschaft, 38440 Wolfsburg (DE)
(72) Erfinder: EIGEL, Thomas, 13585 Berlin (DE)
(86) Internationale Anmeldenummer: PCT/EP2014/059753
(87) Internationale Veröffentlichungsnummer: WO 2014/195094

(56) Entgegenhaltungen:
- EP-A1- 2 314 490
- DE-A1-102004 024 692
- DE-A1-102004 047 861
- DE-A1-102007 043 604
- US-A- 5 585 785

## Beschreibung

Die Erfindung betrifft ein Verfahren zum Überführen eines fahrenden Fahrzeugs in einen Fahrzustand mit vermindertem Kollisionsfolgenrisiko bei einem Notfall des Fahrers, also eine Notfallassistenz, gemäß dem Oberbegriff des Anspruchs 1 sowie ein entsprechendes Notfallassistenzsystem gemäß dem Oberbegriff des Anspruchs 7.

Im Bereich der aktiven Sicherheit eines Kraftfahrzeugs sind heutige Fahrerassistenzsysteme bereits in der Lage Fahraufgaben des Fahrers eines Kraftfahrzeugs wahrzunehmen und teilautomatisierte oder teilautonome Fahrfunktionen auszuführen. Dies manifestiert sich in den Beispielen adaptive Geschwindigkeitsregelung (Adaptive Cruise Control) oder Spurhalteassistent (Lane Assist bzw. Heading Control).

Allerdings sind diese Fahrassistenzsysteme nicht auf einen teilweisen oder gesamten Ausfall des Fahrers des Kraftfahrzeugs ausgelegt. Ein derartiger Fahrerausfall zum Ausführen der ihm obliegenden Fahrfunktionen kann beispielsweise durch eine Übermüdung oder ein plötzlich einsetzendes gesundheitliches Problem des Fahrers bedingt sein. Übermüdung führt oftmals zu einem Sekundenschlaf und damit verbundenem kurzfristigen Verlust der Fahrzeugkontrolle. Unter einem gesundheitlichen Problem wird hier ein körperliches Unvermögen des Fahrers zum Führen des Kraftfahrzeugs verstanden und kann beispielsweise durch einen plötzlichen Herzinfarkt hervorgerufen werden. Derartige Situationen führen oftmals zu gravierenden Unfällen, insbesondere wenn das Fahrzeug sich mit einer hohen Geschwindigkeit auf einer Autobahn oder einer autobahnähnlichen Straße bewegt.

Da sich derartige unfallauslösende Situationen auch im Rahmen gesundheitlicher Probleme, insbesondere Herz- und Kreislaufstörungen älterer Menschen, manifestieren, wurde vom BMFT (Bundesministerium für Bildung und Forschung) das Projekt SmartSenior ins Leben gerufen, welches den Zweck hat technische Maßnahmen zur Beibehaltung der Teilnahme von Senioren am gewohnten Leben zu entwickeln. Im Rahmen dieses Projekts wurde ein Nothalteassistent zum abgesicherten Anhalten eines Fahrzeugs bei plötzlicher Fahrunfähigkeit des Fahrzeugführers entwickelt.

Die Veröffentlichung P. Waldmann et. al.: "Der Nothalteassistent - abgesichertes Anhalten bei plötzlicher Fahrunfähigkeit des Fahrzeugführers", 3. Deutscher AAL-Kongress, 26-27. Januar 2010, Berlin, Tagungsband, ISBN 978-3-8007-3209-8, VDE Verlag Berlin, beschreibt einen derartigen Nothalteassistenten. Dabei besteht für den erkannten Fall des körperlichen Unvermögens des Fahrzeugführers das primäre Ziel des Nothalteassistenten darin, einen Unfall zu vermeiden und das Fahrzeug in einen sicheren Zustand zu überführen. Sollte dies aufgrund einer komplexen Verkehrssituation nicht möglich sein, so muss zumindest die Energie des Fahrzeugs möglichst verringert werden, um die Unfallfolgen zu mindern. Voraussetzung für den Nothalteassistenten ist die sichere Erkennung des körperlichen Unvermögens des Fahrzeugführers, was eine aufwendige Sensorik und Auswertung beinhaltet.

Ziel des Nothalteassistenten bleibt jedoch die Überführung des Fahrzeugs in einen sicheren Zustand, d.h. in den Stillstand, wobei der Nothalteassistent hier ausschließlich für den Einsatz auf Autobahnen und autobahnähnlichen Landstraßen konzipiert ist. In diesem Fall ist der sichere Zustand des Fahrzeugs im Idealfall durch einen Stillstand auf dem Pannenstreifen gegeben, wobei zum Erreichen des Pannenstreifens der Nothalteassistent gegebenenfalls Spurwechsel vornehmen muss.

Der automatisierte Nothalt auf einen Pannenstreifen erfordert neben einer zuverlässigen Spurführung und Längsführung, die durch das ACC und den Lane-Assist bewerkstelligt werden, die Möglichkeit eines abgesicherten Spurwechsels. Dazu muss der Nothalteassistent mit einer komplexen umfelderfassenden Sensorik ausgerüstet sein, um Objekte im 360°-Umfeld des Fahrzeugs zu erfassen und zu tracken, sowie eine präzise digitale Karte zur präzisen Fahrzeugführung aufweisen. Ist aber beispielsweise die Verkehrsdichte so hoch, dass sich ein Spurwechsel als zu schwierig gestaltet, so wird das Fahrzeug innerhalb der aktuellen Fahrspur bis in den Stillstand abgebremst.

Bei diesem Nothalt innerhalb der eigenen Fahrspur auf einer Autobahn oder einer autobahnähnlichen Landstraße soll zwar der rückwärtige Verkehr berücksichtigt werden, bei den auf einer Autobahn üblichen Geschwindigkeiten kann es aufgrund der hohen Relativgeschwindigkeit zwischen dem stehenden Fahrzeug und dem nachfolgenden Verkehr zu Auffahrunfällen mit hohem Energieeintrag in das stehende Fahrzeug kommen, was zu schweren Kollisionsfolgen führen kann. Ferner ist bei dem bekannten Nothaltesystem eine aufwendige Umfeldsensorik notwendig.

Die Druckschrift DE 10 2011 109 618 A1 beschreibt ein Verfahren und eine Vorrichtung zum Betrieb eines Fahrzeugs, wobei zumindest bei einer ermittelten Fahruntüchtigkeit des Fahrers des Fahrzeugs automatisch ein Eingriff in eine Brems-, Lenkungs- und/oder Antriebsstrangfunktion aktiviert und das Fahrzeug bis zu einem Stillstand abgebremst wird. Dabei kann die Fahruntüchtigkeit des Fahrers mittels auftretender Lenk-, Beschleunigungs- und/oder Bremsbetätigungsmuster anhand einer erfassten Müdigkeit des Fahrers, anhand einer Mehrzahl von aktivierten Fahrerassistenzeingriffen innerhalb einer vorgebbaren Zeitdauer und/oder einem erfassten Abkommen des Fahrzeugs von der Fahrbahn ermittelt werden. Auch hier soll das Fahrzeug bevorzugt auf einem Seitenstreifen zum Stillstand gebracht werden, was eine komplexe Umfelderfassungssensorik sowie die Möglichkeit zum kontrollierten automatischen Spurwechsel bedingt.

Die Druckschrift DE 10 2004 024 692 A1 bezieht sich auf ein Verfahren und eine Vorrichtung zur Unterstützung des Fahrers eines Fahrzeugs bei der Einhaltung einer Fahrspur. Hierbei wird der Fahrspurverlauf erfasst und mit dem tatsächlichen Fahrtkursverlauf des Fahrzeugs verglichen, wobei aus dem Vergleichsergebnis abgeleitet wird, ob ein Verlassen der Fahrspur bevorsteht oder bereits erfolgt ist. Bei Erkennung eines bevorstehenden oder bereits erfolgten Verlassens der Fahrspur wird selbsttätig ein Lenkraddrehmoment an einem im Fahrzeug angeordneten Lenkrad erzeugt und eine dadurch verursachte Lenkradwinkeländerung bestimmt, wobei eine Fahrerwarnung ausgelöst wird, wenn die Lenkradwinkeländerung ein vorgegebenes Kriterium erfüllt.

Die Druckschrift US 5 585 785 A betrifft einen druckempfindlichen Wandler, der entlang des Umfangs eines Lenkrades angeordnet ist und den von einer Hand auf das Lenkrad ausgeübten Druck misst. Ein Steuergerät überwacht das variable Drucksignal des Wandlers und gibt eine Warnung aus, wenn der Druck auf einen Wert unterhalb eines Grenzwertes fällt und wenn das Übertragungsverhalten des Drucksignals sich erheblich verschlechtert. Ein am Lenkrad angeordnetes Display zeigt eine visuelle Indikation der Schläfrigkeit des Fahrers.

Die Druckschrift DE 10 2007 043 604 A1 beschreibt ein Verfahren zur Warnung des Fahrers eines Kraftfahrzeugs, bei dem im Falle einer erhöhten Unfallgefahr die Gierrate verändert wird.

Die Druckschrift EP 2 314 490 A1 betrifft ein Verfahren zur Steuerung des Betriebs eines vollautomatischen, zur unabhängigen Fahrzeugführung ausgebildeten Fahrerassistenzsystems eines Kraftfahrzeugs, bei welchem bei Eintritt wenigstens einer Übernahmebedingung eine Fahrerübernahmeaufforderung ausgegeben wird, welche bei Fahrübernahme durch den Fahrer, insbesondere durch Betätigung des Lenkrads und/oder der Pedalerie und/oder eines Schalters, zum Deaktivieren des Fahrerassistenzsystems führt, wobei bei Eintritt einer Übernahmebedingung ein wenigstens einen zur Überführung des Kraftfahrzeugs in einen sicheren Zustand, insbesondere den Stillstand, dienenden Fahreingriff und insbesondere auch eine Fahrerübernahmeaufforderung umfassender Aktionsplan, der einen zeitlichen Ablauf von Steuerungsbefehlen für Fahrzeugsysteme enthält, ausgeführt wird.

Die Druckschrift DE 10 2004 047 861 A1 betrifft ein Verfahren zur Unterstützung des Fahrers eines Fahrzeugs bei der Einhaltung der Fahrspur, bei dem die Fahreraktivität überwacht wird und/oder überwacht wird, ob der Fahrer von der Fahraufgabe abgelenkt ist und ein Verlassen oder bevorstehendes Verlassen der Fahrspur detektiert wird. Dabei wird bei Erkennung eines bevorstehenden oder bereits erfolgten Verlassens der Fahrspur und fehlender Fahreraktivität oder einer Fahreraktivität unterhalb einer vorgebbaren Schwelle oder bei einer Ablenkung des Fahrers von der Verkehrssituation überprüft, ob der Fahrer seine Lenkaufgabe wahrnimmt, wobei bei nicht wahrgenommener Lenkaufgabe eine Warnung und/oder ein korrigierender Lenkeingriff erfolgt.

Bei den bekannten Nothalteassistenten ist einerseits die Anforderungen an die benötigte komplexe Sensorik, insbesondere diejenige zur Erkennung der Fahruntüchtigkeit, sehr hoch und anderseits besteht bei einem Anhaltevorgang bis zu einem Stillstand des Fahrzeugs außerhalb eines sicheren Stand- oder Pannenstreifens die Gefahr von Auffahrunfällen mit hohem Energieeintrag. Ferner muss eine sichere Erkennung eines körperlichen Unvermögens gewährleistet sein.

Der Erfindung liegt daher die Aufgabe zugrunde, ein Verfahren und eine Vorrichtung zu schaffen, wobei ein mit hoher Geschwindigkeit fahrendes Fahrzeug bei einem angenommenen Notfall des Fahrers in einen Fahrzustand mit vermindertem Kollisionsfolgenrisiko überführt wird und wobei die Komplexität an die eingesetzte Sensorik verringert ist.

Diese Aufgabe wird durch ein Verfahren mit den Merkmalen des Anspruchs 1 sowie durch eine Vorrichtung mit den Merkmalen des Anspruchs 7 gelöst. Bevorzugte Ausgestaltungen der Erfindung sind Gegenstand der Unteransprüche.

Das erfindungsgemäße Verfahren zum Überführen eines mit Querführungsunterstützung fahrenden Fahrzeugs in einen Fahrzustand mit vermindertem Kollisionsfolgenrisiko bei einem Notfall des Fahrers, wobei die Geschwindigkeit des Fahrzeugs größer als eine vorgegebene Grenzgeschwindigkeit ist, weist die folgenden Schritte auf:
- Erkennen einer Hands-Off-Situation des Fahrers in einer Hands-Off-Phase und Ausgeben einer Hands-Off-Warnung,
- Durchführen einer Warnungseskalation in einer Eskalationsphase, falls keine Reaktion auf die Hands-Off-Warnung erfolgt, und
- Reduzieren der Fahrzeuggeschwindigkeit in einer Eingriffsphase auf eine Geschwindigkeit kleiner oder gleich der Grenzgeschwindigkeit, wobei das Fahrzeug auf der aktuellen Fahrspur gehalten wird, wenn keine Reaktion auf die Warnungseskalationsphase erfolgt.

Auf diese Weise wird erreicht die Geschwindigkeit des beispielsweise mit hoher Geschwindigkeit auf einer Autobahn oder einer autobahnähnlichen Straße fahrenden Fahrzeugs bei einem Notfall in einen Geschwindigkeitsbereich abzusenken, dessen Unfallfolgen beherrschbar sind. Dabei wird als einziges und maßgebliches Auslösekriterium für die Durchführung der Notfallassistenz auf das Erkennen einer Hands-Off-Situation abgestellt, die allerdings einige Zeit, beispielsweise maximal ca. 10 Sekunden, in Anspruch nimmt. Erfolgt keine Reaktion auf die Hands-Off-Warnung, so geht das Verfahren in die Eskalationsphase über, in der der Versuch unternommen wird, den Fahrer oder gegebenenfalls den Beifahrer zu einer Reaktion zu provozieren. Erfolgt auch in dieser Eskalationsphase keine Reaktion, so geht das Verfahren in die Eingriffsphase über, in der einerseits das Warnniveau weiter gesteigert und andererseits die Geschwindigkeit des Fahrzeugs herabgesetzt wird, um Kollisionsenergie aus dem schnell fahrenden Fahrzeug zu nehmen.

Da sich das mit der Grenzgeschwindigkeit bewegende Fahrzeug gerade nicht im Stillstand befindet, werden ferner die Kollisionsfolgen eines Auffahrunfalls aufgrund der geringeren Relativgeschwindigkeit im Vergleich zu einem Auffahrunfall auf ein stehendes Fahrzeug herabgesetzt.

Ferner erfolgt in der Eskalationsphase der Eingriff der Querführungsunterstützung zu einem späteren Zeitpunkt im Vergleich zum normalen Eingriffszeitpunkt und der spätere Zeitpunkt ist als Funktion der Fahrzeuggeschwindigkeit so gewählt, dass ein Abkommen des Fahrzeugs von dem aktuellen Fahrstreifen verhindert wird. Mit anderen Worten, das Fahrzeug wird in der Eskalationsphase durch die Querführungsunterstützung nicht mehr mittig zwischen den Markierungen der Fahrspur gehalten, sondern pendelt zwischen den Fahrspurmarkierungen hin und her. Durch das Pendeln des Fahrzeugs zwischen den beidseitigen Markierungen seiner aktuellen Fahrspur soll den Fahrer, falls er fahrfähig ist, oder der mögliche Beifahrer zu einer Reaktion provoziert werden, wobei zusätzlich die Anzeige der Querführungsunterstützung den Zustand "ausgeschaltet" anzeigen kann. Damit wird bei einem bewussten Fahrer der Eindruck erweckt, dass er ohne Querführungsunterstützung fährt und die Gefahr des Abkommen von der Fahrbahn besteht. Ferner wird durch das ungewöhnliche Fahrverhalten der Verkehr in der Umgebung des Fahrzeugs auf eine mögliche Komplikation hingewiesen und gewarnt.

Erfolgt in der Eskalationsphase, die beispielsweise bis zu 10 Sekunden, insbesondere 8 Sekunden betragen kann, immer noch keine Reaktion, so verdichtet sich der Verdacht auf eine Fahrunfähigkeit des Fahrers weiter. Allerdings kann nicht ausgeschlossen werden, dass der Fahrer bewusst die Grenzen der Technik ausloten möchte.

Vorzugsweise wird nach erfolglosem Verlauf der Eskalationsphase in der nachfolgenden Eingriffsphase die Warnungseskalation intensiviert, indem zumindest die Querführung des Fahrzeugs durch ein ruckartiges Querprofil weiter beeinträchtigt wird. Auf diese Weise wird in der Eingriffsphase weiter versucht durch ein unbequemes Fahrverhalten des Fahrzeugs eine Reaktion des Fahrers oder eines eventuellen Beifahrers zu provozieren. Ferner wird durch diese unorthodoxe Fahrweise dem Fahrzeugumfeld deutlich signalisiert, dass mit dem Fahrzeug etwas nicht stimmt; es erfolgt also eine Warnung an das Fahrzeugumfeld. Dabei erfolgt in der Eingriffsphase die Verringerung der Geschwindigkeit des Fahrzeugs.

Weiter bevorzugt werden in der Eingriffsphase Bremsrucke zur Warnungseskalation eingesetzt. Diese Bremsrucke sollen eine Reaktion seitens des Fahrers oder des Beifahrers provozieren. Auch hier haben die Bremsrucke den zusätzlichen Effekt einer Warnung an das Fahrzeugumfeld.

Schließlich können in der Eingriffsphase die akustischen und/oder optischen Warnungen intensiviert werden, um den Fahrer zu einer Reaktion zu veranlassen. Ferner kann in der Eingriffsphase die Warnblinkanlage aktiviert werden, um eine weitere direkte Warnung an das Fahrzeugumfeld zu erzeugen.

Vorzugsweise fährt das Fahrzeug zur Vermeidung eines Auffahrunfalls mit einer aktivierten Längsführungsunterstützung, wobei die Längsführungsunterstützung aktiv oder passiv im Hintergrund sein kann.

Weiter bevorzugt werden mit dem Erreichen der Grenz- oder Notfallgeschwindigkeit zumindest alle Längs- und Querführungen deaktiviert. Dabei kann die Grenzgeschwindigkeit von der Fahrspur abhängen, auf der sich das Fahrzeug befindet. So kann bei einer dreispurigen Autobahn die Grenzgeschwindigkeit der linken Fahrspur bei 100 km/h, die Grenzgeschwindigkeit der mittleren Fahrspur bei 60 km/h und diejenige der rechten Fahrspur bei 40 km/h liegen. Ferner können alle Warnungen an den Fahrer deaktiviert werden, wobei die Warnblinkanlage zur Warnung der Umgebung des Fahrzeugs weiterhin aktiv bleiben kann.

Es ist auch möglich, dass die Grenzgeschwindigkeit durch die Geschwindigkeit Null gebildet wird, d.h. das Fahrzeug in den Stillstand in der Eingriffsphase abgebremst wird.

Ist die Grenzgeschwindigkeit größer Null, so muss ab diesem Zeitpunkt daher mit einem Unfall des Fahrzeugs gerechnet werden, dessen Folgen aufgrund der für eine Autobahn oder autobahnähnlichen Straße niedrigen Notfallgeschwindigkeit begrenzt sind. Mit anderen Worten, das Fahrzeug beendet seine Fahrt in absehbarer Zeit beispielsweise durch ein Abkommen von der Fahrbahn mit relativ geringer Geschwindigkeit.

Ist die Grenzgeschwindigkeit Null, so bleibt das Fahrzeug in seiner Fahrspur stehen.

Die erfindungsgemäße Vorrichtung, welche zur Durchführung des im Vorangegangenen beschriebenen Verfahrens zum Überführen eines mit Querführungsunterstützung fahrenden Fahrzeugs in einen Fahrzustand mit vermindertem Kollisionsfolgenrisiko bei einem Notfall des Fahrers dient, umfasst
- einen Längsführungsassistenten,
- einen Querführungsassistenten,
- eine Hands-Off-Erkennungseinrichtung, und
   einen Notfallassistenten zur Durchführung von Warnungseskalationen und Eingriffen in die Fahrfunktionen des Fahrzeugs als Funktion der Ergebnisse der Hands-Off-Erkennungseinrichtung, wobei
   die Geschwindigkeit des Fahrzeugs größer als eine vorgegebene Grenzgeschwindigkeit ist, und
   in der Eskalationsphase (P3) der Eingriff der Querführungsunterstützung zu einem späteren Zeitpunkt im Vergleich zur Normalunterstützung erfolgt, wobei der spätere Zeitpunkt als Funktion der Fahrzeuggeschwindigkeit so gewählt ist, dass ein Abkommen des Fahrzeugs (1) von dem aktuellen Fahrstreifen (2) verhindert wird Vorzugsweise führt der Notfallassistent nach einer positiven Hands-Off-Erkennung die Warnungseskalation in mindestens zwei aufeinanderfolgenden Phasen durch, nämlich insbesondere einer Eskalationsphase und einer nachfolgenden Eingriffsphase, wobei in der Eskalationsphase Warnungen an den Fahrer bzw. den Beifahrer in verstärktem Masse erzeugt werden, während in der Eingriffsphase neben einer weiteren Eskalation der Warnungen zusätzlich Eingriffe in das Fahrgeschehen vorgenommen werden. Diese Eingriffe können Bremseingriffe und Querführungseingriffe sein. Ferner sind auch Eingriffe in den Antriebsstrang möglich, um die Fahrzeuggeschwindigkeit abzusenken.

Nach erfolglosem Ablauf der Eingriffsphase und mit dem Erreichen einer Grenzgeschwindigkeit deaktiviert der Notfallassistent die Längs- und Querführung und sämtliche Warnungen.

Eine bevorzugte Ausführungsform der Erfindung wird nachfolgend anhand der Zeichnungen erläutert. Dabei zeigt
- Fig. 1: eine schematische Funktionsbeschreibung des Verfahrens, und
- Fig. 2: ein Blockdiagramm der Vorrichtung zur Durchführung des Verfahrens.

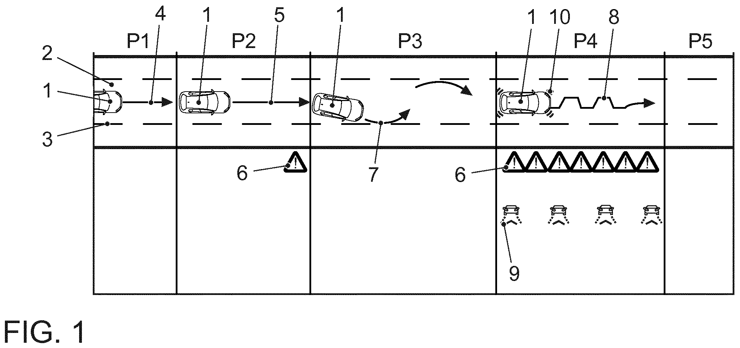

Fig. 1 beschreibt in schematischer Darstellung die Funktionsweise des Verfahrens zum Überführen eines mit Querführungsunterstützung fahrenden Fahrzeugs 1 in einen Fahrzustand mit vermindertem Kollisionsfolgenrisiko bei einem vermuteten Notfall des Fahrers, welches in einem Notfallassistent realisiert ist. Das Verfahren hat das Ziel die Geschwindigkeit des Fahrzeugs 1 kontrolliert auf eine Notfallgeschwindigkeit zu reduzieren, wobei das Verfahren auf einer Hands-Off-Erkennung basiert.

In einer ersten Phase P1 bewegt sich ein Fahrzeug 1 auf einem Fahrstreifen 2 beispielsweise einer Autobahn oder einer autobahnähnlichen Straße, welcher mit Markierungen 3 gegenüber benachbarten Fahrstreifen abgegrenzt ist. In dieser Phase P1 ist der Fahrer fahrtüchtig und das Fahrzeug 1 bewegt sich mit aktivierter Querführungsunterstützung entlang einer Fahrtrajektorie 4, die durch die Querführungsunterstützung, also einen Spurhalteassistent oder Lane-Assist, das Fahrzeug 1 mittig auf seiner Fahrspur 3 hält. Eine Längsführung, wie beispielsweise ACC, kann dabei aktiv oder inaktiv sein.

In der zweiten Phase P2, der Hands-Off-Phase, detektiert eine Hands-Off-Einrichtung, dass der Fahrer des Fahrzeugs 1 das Lenkrad nicht mehr ergriffen hat. Nach einer ausreichenden Zeitspanne, die zum Erkennen des Hands-Off notwendig ist und die zwischen 2 und 10 Sekunden betragen kann, erfolgt eine Hands-Off-Warnung durch zumindest eine akustische Warnung, die in Fig. 1 durch das Warnsignal 6 symbolisiert ist. Während der zweiten Phase P2 bleibt die Querführungsunterstützung aktiv und hält das Fahrzeug 1 entlang der mittigen Fahrtrajektorie 5. Nach Ablauf der zweiten Phase P2 und dem Ausgeben der Hands-Off-Warnung 6 kann allerdings keine Aussage getroffen werden, ob der Fahrer absichtlich oder unabsichtlich keinen Lenkradkontakt hat, wie dies bereits im Vorangegangenen erläutert wurde.

Reagiert der Fahrer des Fahrzeugs 1 nicht auf die Hands-Off-Warnhinweise 6, so kann dies bedeuten, dass der Fahrer absichtlich freihändig fährt, um die automatische Fahrmöglichkeit der Querführung auszutesten. Dies ist zu unterbinden. Die durch die Hands-Off-Erkennung detektierten fehlenden Lenkeingriffe können aber auch bedeuten, dass der Fahrer des Fahrzeugs 1 nicht fahrtüchtig ist. Dies kann ursächlich durch einen medizinischen Notfall oder durch ein Einschlafen des Fahrers, beispielsweise aufgrund einer Übermüdung, bedingt sein.

In der dritten Phase P3, der Eskalationsphase, soll daher unabhängig von dem Grund der fehlenden Lenkaktivität der Versuch unternommen werden, den Fahrer zu reaktivieren oder den Beifahrer zu aktivieren. Dazu wird mit dem Eintreten in die dritte Phase P3 eine erste Stufe der Warnungseskalation durchgeführt und für Fahrer bzw. Beifahrer des Fahrzeugs 1 soll der Eindruck erweckt werden, dass die Querführungsassistenz deaktiviert ist. Dies wird dadurch bewirkt, dass das Fahrzeug 1 nicht mehr in der Mitte des eigenen Fahrstreifens 2 gehalten wird. Ferner wird der Eindruck erweckt, dass die Querführung deaktiviert ist, indem die Anzeige der Querführung abgeschaltet wird. Im Hintergrund bewirkt der in der Eskalationsphase P3 aktivierte Notfallassistent, dass die Querführung des Fahrzeugs 1 zu einem späteren Zeitpunkt im Vergleich zu dem normalen Verhalten der Querführung eingreift, wobei der spätere Zeitpunkt aber so gewählt ist, dass das Fahrzeug 1 den Fahrstreifen 2 gerade nicht verlässt. Das Fahrzeug pendelt sozusagen zwischen den linken und rechten Markierungen 3 des Fahrstreifens 2 entlang einer Fahrtrajektorie 7 der dritten Phase P3 hin und her. Für den Fahrer des Fahrzeugs 1, der beispielsweise kurzfristig eingeschlafen war oder die Grenzen der Technik ausloten möchte, wird auf diese Weise der Eindruck erweckt, dass die Querführung deaktiviert ist und er folglich die Fahrverantwortung wieder übernehmen muss. Sollte der Fahrer weiter inaktiv bleiben, was eine Fahruntüchtigkeit wahrscheinlicher werden lässt, so ist dies auch ein dringender Hinweis an einen möglichen Beifahrer nun aktiv zu werden, indem dieser beispielsweise die Lenkung übernimmt oder eine sonstige Maßnahme ergreift. Da in dieser dritten Phase P3 im Hintergrund der Notfallassistent aktiviert ist, wird das Fahrzeug 1 auf der Fahrspur 2 gehalten und kann diese nicht verlassen.

Zeigt der Fahrer des Fahrzeugs 1 weiterhin keine Reaktion, so geht das Verfahren über in die vierte Phase P4, die Eingriffsphase, in der einerseits die Warnungseskalation intensiviert wird und andererseits eine Reduktion der Fahrzeuggeschwindigkeit durch einen geeigneten Eingriff in die Steuerung des Fahrzeugs 1 bewirkt wird. Mit anderen Worten, der Notfallassistent agiert nun im Vordergrund. Die weitere Warnungseskalation kann durch eine dauerhafte akustische Warnung bewirkt werden, wie dies in Fig. 1 schematisch durch die Vielzahl der Warnsymbole 6 dargestellt ist. Ferner wird das Fahrzeug 1 durch kurzfristige Bremsrucke in einen unruhigen Zustand versetzt. Um eine Reaktivierung des Fahrers des Fahrzeugs 1 zu unterstützen oder eine Reaktion des Beifahrers auszulösen, wird die Querführung des Fahrzeugs 1 unkomfortabel gestaltet. Dies wird durch Lenkeingriffe hervorgerufen, die ein ruckartiges Querprofil erzeugen, wie dies durch die Fahrtrajektorie 8 der vierten Phase P4 symbolisch dargestellt ist. Durch diese ungewöhnliche Fahrtrajektorie 8 wird zusätzlich das Fahrzeugumfeld des Fahrzeugs 1 gewarnt. Ferner kann eine blinkende Notfallanzeige 9 darauf hinweisen, dass der Notfallassistent aktiv ist. Eine weitere Warnung des Umfeldes kann beispielsweise noch durch eine Aktivierung der Warnblinkanlage 10 erfolgen.

Mit dem Erreichen der Notfallgeschwindigkeit, die beispielsweise auf der mittleren Spur 60 km/h beträgt, wird die fünfte Phase P5 des Verfahrensablaufs erreicht, in der unter der Voraussetzung einer unkritischen Verkehrssituation die Längs- und Querführungen sowie alle Warnungen deaktiviert werden. Dabei bedeutet eine unkritische Verkehrssituation, dass der weitere Straßenverlauf keine kritische Krümmung aufweist und dass keine kritische Annäherung an ein vorausfahrendes Fahrzeug erkannt wird. Zwar scheint es auf den ersten Blick, dass das Fahrzeug in der fünften Phase P5 mehr oder weniger sich selbst überlassen wird, allerdings sind die Folgen eines Unfalls des Fahrzeugs bei der genannten Notfallgeschwindigkeit weniger gravierend, insbesondere da das Fahrzeug mit hoher Wahrscheinlichkeit die Fahrbahn in absehbarer Zeit verlassen wird. Ferner ist ein Auffahrunfall mit einem nachfolgenden Fahrzeug aufgrund der Relativgeschwindigkeit weniger gravierend als mit einem im Stillstand auf der Fahrspur befindlichen Fahrzeug.

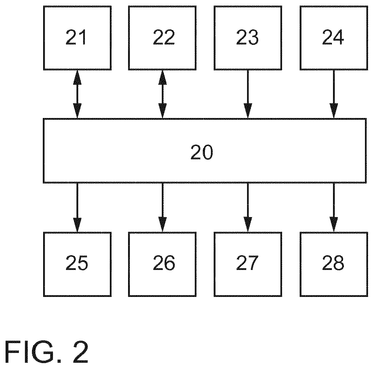

Fig. 2 zeigt in schematischer Darstellung die erfindungsgemäße Vorrichtung, deren Kernbestandteil durch einen Notfallassistenten 20 gebildet wird. Der Notfallassistent 20 steht in Verbindung mit einer Querführungseinrichtung 21 und einer Längsführungseinrichtung 22. Eine Querführungseinrichtung ist beispielsweise eine Spurhalteeinrichtung oder ein Lane-Assist. Als Längsführungseinrichtung kommt beispielsweise eine adaptive Geschwindigkeits- und Abstandsregelung, also ein ACC, oder ein Notbremsassistent in Betracht. Ferner erhält der Notfallassistent Informationen von einer Hands-Off-Erkennung 23 und einer Einrichtung 24 zur Erkennung einer Fahrer-/Beifahreraktivität.

Aufgrund des Ergebnisses der Hands-Off-Erkennung 23 erzeugt der Notfallassistent 20 geeignete Warnungen 25 akustischer, optischer und/oder haptischer Natur und führt Lenkeingriffe 26, Bremseingriffe 27 und Eingriffe in den Antriebsstrang 28 durch.

### BEZUGSZEICHENLISTE

- P1: erste Phase
- P2: zweite Phase
- P3: dritte Phase
- P4: vierte Phase
- P5: fünfte Phase
- 1: Fahrzeug
- 2: Fahrspur
- 3: Markierungen
- 4: Fahrtrajektorie erste Phase
- 5: Fahrtrajektorie zweite Phase
- 6: akustische/optische Warnung
- 7: Fahrtrajektorie Eskalationsphase Notfallassistent
- 8: Fahrtrajektorie Eingriffsphase Notfallassistent
- 9: optische Anzeige Notfallassistent
- 10: Warnblinker
- 20: Notfallassistent
- 21: Querführungseinrichtung
- 22: Längsführungseinrichtung
- 23: Hands-Off-Erkennung
- 24: Erkennung Fahreraktivität/Beifahreraktivität
- 25: akustische/optische/haptische Warnung
- 26: Lenkeingriff
- 27: Bremseingriff
- 28: Antriebsstrangeingriff

## Patentansprüche

1. Verfahren zum Überführen eines mit Querführungsunterstützung fahrenden Fahrzeugs (1) in einen Fahrzustand mit vermindertem Kollisionsfolgenrisiko bei einem Notfall des Fahrers, mit den folgenden Schritten:
Erkennen einer Hands-Off-Situation des Fahrers und Ausgeben einer Hands-Off-Warnung in einer Hands-Off-Phase (P2),
Durchführen einer Warnungseskalation in einer Eskalationsphase (P3), falls keine Reaktion auf die Hands-Off-Warnung erfolgt, und
Reduzieren der Fahrzeuggeschwindigkeit in einer Eingriffsphase (P4) auf eine Geschwindigkeit kleiner oder gleich einer Grenzgeschwindigkeit, wobei das Fahrzeug (1) auf der aktuellen Fahrspur (2) gehalten wird, wenn keine Reaktion auf die Eskalationsphase (P3) erfolgt,
**dadurch gekennzeichnet, dass**
die Geschwindigkeit des Fahrzeugs größer als eine vorgegebene Grenzgeschwindigkeit ist, und
in der Eskalationsphase (P3) der Eingriff der Querführungsunterstützung zu einem späteren Zeitpunkt im Vergleich zur Normalunterstützung erfolgt, wobei der spätere Zeitpunkt als Funktion der Fahrzeuggeschwindigkeit so gewählt ist, dass ein Abkommen des Fahrzeugs (1) von dem aktuellen Fahrstreifen (2) verhindert wird.

2. Verfahren nach Anspruch 1, **dadurch gekennzeichnet, dass** in der Eingriffsphase (P4) die Warnungseskalation intensiviert wird, indem zumindest die Querführung des Fahrzeugs (1) ein ruckartiges Querprofil aufweist.

3. Verfahren nach Anspruch 2, **dadurch gekennzeichnet, dass** in der Eingriffsphase (P4) Bremsrucke zur Warnungseskalation eingesetzt werden.

4. Verfahren nach einem der Ansprüche 2 oder 3, **dadurch gekennzeichnet, dass** in der Eingriffsphase (P4) akustische und optische Warnung (6, 8) intensiviert werden.

5. Verfahren nach einem der Ansprüche 2 bis 4, **dadurch gekennzeichnet, dass** in der Eingriffsphase (P4) die Warnblinkanlage (10) aktiviert wird.

6. Verfahren nach einem der vorangegangenen Ansprüche, **dadurch gekennzeichnet, dass** mit dem Erreichen der Grenzgeschwindigkeit, die bei einer mehrspurigen Straße eine Funktion der Fahrspur ist, alle Längs- und Querführungen sowie alle Warnungen deaktiviert werden.

7. Vorrichtung ausgelegt zur Durchführung des Verfahrens zum Überführen eines mit Querführungsunterstützung fahrenden Fahrzeugs in einen Fahrzustand mit vermindertem Kollisionsfolgenrisiko bei einem Notfall des Fahrers nach einem der vorangegangenen Ansprüche, mit
einer Längsführungseinrichtung (22),
einer Querführungseinrichtung (21), und
einer Hands-Off-Erkennungseinrichtung (23), und
einem Notfallassistenten (20) zur Durchführung von Warnungseskalationen in einer Eskalationsphase (P3) und Eingriffen in die Fahrfunktionen des Fahrzeugs in einer Eingriffsphase (P4) als Funktion der Ergebnisse der Hands-Off-Erkennungseinrichtung (23).
**dadurch gekennzeichnet, dass**
die Geschwindigkeit des Fahrzeugs größer als eine vorgegebene Grenzgeschwindigkeit ist, und
in der Eskalationsphase (P3) der Eingriff der Querführungsunterstützung zu einem späteren Zeitpunkt im Vergleich zur Normalunterstützung erfolgt, wobei der spätere Zeitpunkt als Funktion der Fahrzeuggeschwindigkeit so gewählt ist, dass ein Abkommen des Fahrzeugs (1) von dem aktuellen Fahrstreifen (2) verhindert wird

8. Vorrichtung nach Anspruch 7, **dadurch gekennzeichnet, dass** der Notfallassistent (20) nach einer positiven Hands-Off-Erkennung die Warnungseskalation in mindestens zwei aufeinanderfolgenden Fahrphasen, insbesondere der Eskalationsphase (P3) und der nachfolgenden Eingriffsphase (P4), durchführt.

9. Vorrichtung nach einem der Ansprüche 7 oder 8, **dadurch gekennzeichnet, dass** der Notfallassistent (20) nach erfolglosem Ablauf der Eingriffsphase (P4) und mit dem Erreichen einer Grenzgeschwindigkeit zumindest die Längsführungseinrichtung (22) und die Querführungseinrichtung (21) deaktiviert.

## Claims

1. Method for transferring a vehicle (1) traveling with lateral guidance support into a driving state with a reduced risk of the consequences of a collision in the event of the driver experiencing an emergency, comprising the following steps:
detecting a hands-off situation of the driver and outputting a hands-off warning in a hands-off phase (P2), carrying out a warning escalation in an escalation phase (P3) if there is no reaction to the hands-off warning, and reducing the vehicle speed in an intervention phase (P4) to a speed which is lower than or equal to a speed limit, wherein the vehicle (1) is kept on the current lane (2) if there is no reaction to the escalation phase (P3), **characterized in that**
the speed of the vehicle is higher than a predefined speed limit, and
in the escalation phase (P3) the intervention of the lateral guidance support takes place at a later time compared to normal support, wherein the later time is selected as a function of the vehicle speed in such a way that the vehicle (1) is prevented from exiting the current lane (2).

2. Method according to Claim 1, **characterized in that** in the intervention phase (P4) the warning escalation is intensified by virtue of the fact that at least the lateral guidance of the vehicle (1) has a jerky lateral profile.

3. Method according to Claim 2, **characterized in that** braking jolts for escalating the warning are used in the intervention phase (P4).

4. Method according to one of Claims 2 or 3, **characterized in that** acoustic and visual warnings (6, 8) are intensified in the intervention phase (P4).

5. Method according to one of Claims 2 to 4, **characterized in that** the flashing indicator warning system (10) is activated in the intervention phase (P4).

6. Method according to one of the preceding claims, **characterized in that** all the longitudinal and lateral guidance as well as all the warnings are deactivated when the speed limit, which in the case of a multilane road is a function of the lane, is reached.

7. Device configured for carrying out the method for transferring a vehicle traveling with lateral guidance support into a driving state with a reduced risk of the consequences of a collision in the event of the driver experiencing an emergency, according to one of the preceding claims, having
a longitudinal guidance apparatus (22),
a lateral guidance apparatus (21), and
a hands-off detection apparatus (23),and
an emergency assistant (20) for carrying out warning escalations in an escalation phase (P3) and interventions into the driving functions of the vehicle in an intervention phase (P4) as a function of the results of the hands-off detection apparatus (23),
**characterized in that**
the speed of the vehicle is higher than a predefined speed limit, and
in the escalation phase (P3) the intervention of the lateral guidance support takes place at a later time compared to normal support, wherein the later time is selected as a function of the vehicle speed in such a way that the vehicle (1) is prevented from exiting the current lane (2).

8. Device according to Claim 7, **characterized in that** after a positive hands-off detection the emergency assistant (20) carries out the warning escalation in at least two successive driving phases, in particular the escalation phase (P3) and the subsequent intervention phase (P4).

9. Device according to either of Claims 7 and 8, **characterized in that** after the intervention phase (P4) has run without success and when a speed limit is reached the emergency assistant (20) deactivates at least the longitudinal guidance apparatus (22) and the lateral guidance apparatus (21).

## Revendications

1. Procédé pour faire passer un véhicule (1) roulant avec assistance de guidage transversal à un état de roulage avec un risque diminué des conséquences d'une collision dans un cas d'urgence du conducteur, comprenant les étapes suivantes:
reconnaître une situation de perte de contrôle du conducteur et émettre un avertissement de perte de contrôle dans une phase de perte de contrôle (P2),
opérer une escalade d'avertissement dans une phase d'escalade (P3) dans le cas où il n'y a aucune réaction à l'avertissement de perte de contrôle, et
réduire la vitesse du véhicule dans une phase d'intervention (P4) à une vitesse inférieure ou égale à une vitesse limite, dans lequel le véhicule (1) est maintenu dans la bande de roulage actuelle (2), s'il ne se produit aucune réaction à la phase d'escalade (P3), **caractérisé en ce que** la vitesse du véhicule est supérieure à une vitesse limite prédéterminée et l'intervention de l'assistance de guidage transversal se produit dans la phase d'escalade (P3) à un instant plus tardif par comparaison avec l'assistance normale, dans lequel l'instant plus tardif est choisi en fonction de la vitesse du véhicule, de telle manière qu'une sortie du véhicule (1) hors de la bande de roulage actuelle (2) soit empêchée.

2. Procédé selon la revendication 1, **caractérisé en ce que** l'on intensifie dans la phase d'intervention (P4) l'escalade d'avertissement, par le fait qu'au moins le guidage transversal du véhicule (1) présente un profil transversal saccadé.

3. Procédé selon la revendication 2, **caractérisé en ce que** l'on utilise dans la phase d'intervention (P4) des coups de frein en tant qu'escalade d'avertissement.

4. Procédé selon une des revendications 2 ou 3, **caractérisé en ce que** l'on intensifie dans la phase d'intervention (P4) les avertissements acoustiques et optiques (6, 8).

5. Procédé selon une des revendications 2 à 4, **caractérisé en ce que** l'on active le système des feux de détresse (10) dans la phase d'intervention (P4).

6. Procédé selon l'une quelconque des revendications précédentes, **caractérisé en ce que** lorsque l'on atteint la vitesse limite, qui est une fonction de la bande de roulage sur une route à plusieurs bandes, tous les guidages longitudinaux et transversaux ainsi que tous les avertissements sont désactivés.

7. Dispositif conçu pour la mise en oeuvre du procédé pour faire passer un véhicule (1) roulant avec une assistance de guidage transversal à un état de roulage avec un risque diminué des conséquences d'une collision dans un cas d'urgence du conducteur selon l'une quelconque des revendications précédentes, avec
un dispositif de guidage longitudinal (22),
un dispositif de guidage transversal (21), et
un dispositif de reconnaissance de perte de contrôle (23), et
un assistant d'urgence (20) pour l'exécution d'une escalade d'avertissement dans une phase d'escalade (P3) et d'une intervention dans les fonctions de conduite du véhicule dans une phase d'intervention (P4) en fonction des résultats du dispositif de reconnaissance de perte de contrôle (23),
**caractérisé en ce que** la vitesse du véhicule est supérieure à une vitesse limite prédéterminée et l'intervention de l'assistance de guidage transversal se produit dans la phase d'escalade (P3) à un instant plus tardif par comparaison avec l'assistance normale, dans lequel l'instant plus tardif est choisi en fonction de la vitesse du véhicule, de telle manière qu'une sortie du véhicule (1) hors de la bande de roulage actuelle (2) soit empêchée.

8. Dispositif selon la revendication 7, **caractérisé en ce que** l'assistant d'urgence (20) exécute, après une reconnaissance positive de perte de contrôle, une escalade d'avertissement en au moins deux phases de conduite successives, en particulier la phase d'escalade (P3) et la phase suivante d'intervention (P4).

9. Dispositif selon une des revendications 7 ou 8, **caractérisé en ce que** l'assistant d'urgence (20) désactive au moins le dispositif de guidage longitudinal (22) et le dispositif de guidage transversal (21) après le déroulement sans succès de la phase d'intervention (P4) et lorsque la vitesse limite est atteinte.
